# EUROPÄISCHE PATENTSCHRIFT

(11) **EP 0 434 911 B1**
(45) Veröffentlichungstag und Bekanntmachung des Hinweises auf die Patenterteilung: **13.07.1994**
(21) Anmeldenummer: 90118541.3
(22) Anmeldetag: 27.09.1990
(51) Int. Cl.: F04D 29/06, F04D 29/10, F04D 29/58, F16N 39/00

(54) **Gebläse oder Pumpe mit einer vertikal angeordneten Welle**
Blower or pump with vertically orientated shaft
Ventilateur ou pompe avec un arbre orienté verticalement

(30) Priorität: 27.12.1989 DE 3943113
(43) Veröffentlichungstag der Anmeldung: 03.07.1991
(73) Patentinhaber: LEYBOLD AKTIENGESELLSCHAFT, D-63450 Hanau (DE)
(72) Erfinder: Kabelitz, Hans-Peter, Dr., D-5000 Köln 90 (DE); Mühlhoff, Martin, D-5000 Köln 40 (DE); Kriechel, Hans, D-5303 Bornheim 1 (DE); Maas, Wolfgang, D-5000 Köln 30 (DE); Kolvenbach, Dieter-Martin, D-5000 Köln 1 (DE)
(74) Vertreter: Leineweber, Jürgen, Dipl.-Phys.

(56) Entgegenhaltungen:
- EP-A- 0 147 015
- EP-A- 0 235 392
- DE-A- 3 032 967
- GB-A- 2 181 186
- PATENT ABSTRACTS OF JAPAN, vol. 13, no. 376(M-862)(3724) 21 August 1989; & JP-A-1130093 (Hitachi) 23 Mai 1989
- PATENT ABSTRACTS OF JAPAN, vol. 7, no. 88 (E-170)(1233), 12 April 1983; & JP-A-5814589 (Hitachi) 27 Januar 1983

## Beschreibung

Die Erfindung bezieht sich auf ein Gebläse oder eine Pumpe mit einem Rotor, mit einer während des Betriebs im wesentlichen vertikal angeordneten Rotorwelle, mit einem unterhalb des Rotors angeordneten Gehäuse, in dem sich ein Antriebsmotor, Wellenlagerungen und ein Ölsumpf befinden, und mit einer die Wandung des Gehäuses durchsetzenden Evakuierungsleitung zum Anschluß einer Vakuumpumpe an den Gehäuseinnenraum.

Bei Pumpen oder Gebläsen dieser Art findet während des Betriebs im Motor- oder Lagerraum eine Ölzerstäubung statt, und zwar sowohl in den Lagern als auch an den Innenwandungen, wenn Schleuderscheiben vorhanden sind. Es besteht deshalb die Gefahr, daß Öldämpfe durch die Wellendurchführung in den Bereich des Rotors gelangen. Diese Gefahr ist besonders hoch, wenn die Ölzerstäubung infolge hoher Drehzahlen besonders stark ist und wenn im Bereich des Rotors ein Unterdruck herrscht, wie es beispielsweise bei Turboradialgebläsen, die der Umwälzung von Gasen in Gaslasern dienen, und bei Turbomolekularvakuumpumpen der Fall ist.

Um ein Eindringen von Öldämpfen durch die Wellendurchführung zur Rotorseite zu vermeiden, ist es bekannt, den Innenraum des Motor- und Lagergehäuses an eine Vakuumpumpe anzuschließen. Wird der Druck im Gehäuse niedriger gehalten als auf der Rotorseite, dann ist sichergestellt, daß Öldämpfe nicht auf die Rotorseite gelangen können. Bei dieser Lösung saugt die an den Motor- und Lagerraum angeschlossene Vakuumpumpe die durch Ölzertäubung entstehenden Öldämpfe ab, was auf Dauer zu einem Ölverlust im Motor- und Lagerraum führt.

Aus der EP-A-147015 ist eine Turbomolekularvakuumpumpe mit einem Vorvakuumanschluß bekannt. Der das Gehäuse durchsetzende Anschluß befindet sich unmittelbar unterhalb des Rotors, also im oberen Bereich des sich unterhalb des Rotors befindlichen Gehäuses. Über eine Bohrung in der Gehäusewandung steht der Anschluß mit dem im unteren Bereich des Gehäuses befindlichen Ölsumpf in Verbindung. Im Gehäuse entstehende Dämpfe werden durch den Vorvakuumanschluß abgesaugt, so daß auch bei dieser Pumpe die Gefahr eines Ölmangels besteht.

Der vorliegenden Erfindung liegt die Aufgabe zugrunde, ein Gebläse oder eine Pumpe der eingangs genannten Art zu schaffen, bei der die durch die Evakuierung des Motor- und Lagerraumes entstehende Ölverluste weitestgehend vermieden sind.

Erfindungsgemäß wird diese Aufgabe dadurch gelöst, daß ein Auslaßabschnitt der Evakuierungsleitung die tiefste Stelle der Evakuierungsleitung bildet und mit dem Ölsumpf in Verbindung steht. Ein großer Teil des Öls, das in den abgesaugten und in die Evakuierungsleitung gelangenden Gasen enthalten ist, schlägt sich an den - vorzugsweise gekühlten - Innenwandungen nieder und ist damit in der Lage, durch den Leitungssabschnitt, der die Evakuierungsleitung unmittelbar mit dem Ölsumpf verbindet, in den Ölsumpf zurückzuströmen. Ein relativ schnell eintretender, zu Schäden führender Ölmangel infolge der Evakuierung des Motorraumes ist deshalb nicht zu befürchten.

Besonders vorteilhaft ist es, in dem Leitungssabschnitt, der die Evakuierungsleitung unmittelbar mit dem Ölsumpf verbindet, einen Filterwerkstoff, z.B. aus Polyäthylen (Handelsname "Poroplast") unterzubringen. Ein Kapillar-Filterelement mit diesen Eigenschaften saugt zunächst das anfallende Öl auf. Nach einer Sättigung tropft das Öl, bedingt durch die geodätische Höhe, in den Ölsumpf ab. Ein derartiges Filterelement verhindert den unmittelbaren Druckausgleich zwischen dem Druck im Ölsumpf und dem - etwas niedrigeren - Druck im Auslaßbereich der Evakuierungsleitung. Die Gefahr, daß im Filterwerkstoff gebundenes Öl zurückgefördert wird, ist bei den vorhandenen Druckverhältnissen ausgeschlossen. Der Filterwerkstoff verhindert, daß Öl bzw. Ölschaum aus dem Ölsumpf in die Evakuierungsleitung gelangt. Der Grund dafür liegt darin, daß der gewählte Filterwerkstoff einen sehr geringen Leitwert für Gase hat.

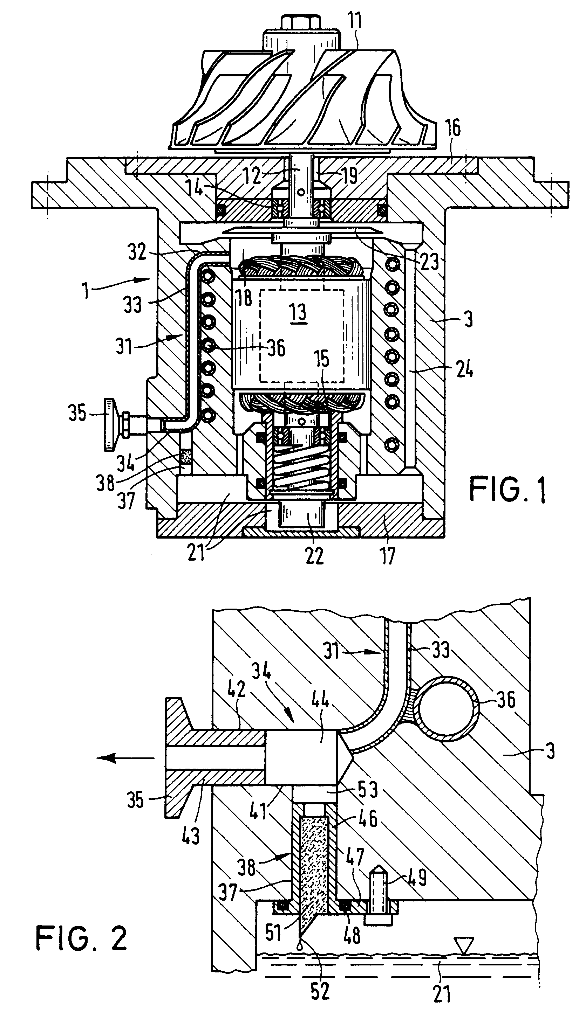

Weitere Vorteile und Einzelheiten der Erfindung sollen anhand von in den Figuren 1 und 2 dargestellten Ausführungsbeispielen erläutert werden. Es zeigen
- Figur 1 einen Schnitt durch das Motor- und Lagergehäuse eines Turboradialgebläses und
- Figur 2 einen Ausschnitt aus Figur 1 mit weiteren Details.

Das in Figur 1 nur teilweise (es fehlt im wesentlichen das Strömungsgehäuse) dargestellte Turboradialgebläse 1 weist das Motor- und Lagergehäuse 3 auf. Die in diesem Gehäuse gehalterte rotierende Einheit besteht aus dem Gebläserotor 11, der Welle 12 und dem Anker des Motors 13. Zur Lagerung der Welle 12 sind Wälzlager 14 und 15 vorgesehen, von denen eines (14) zwischen Gebläserotor 11 und Motoranker angeordnet ist, während sich das zweite Lager 15 im Bereich des dem Gebläserotor 11 abgewandten freien Endes der Welle 12 befindet.

Den stirnseitigen Abschluß des Gehäuses 3 bilden flanschartige Deckel 16 und 17, so daß der Gehäuseinnenraum 18 bis auf die Wellendurchführung 19 im oberen Deckel 16 abgeschlossen ist. Der untere Deckel 17 schließt den Ölsumpf 21 ab. In diesen Ölsumpf ragt eine im Bereich des freien Endes der Welle 12 befindliche Ölpumpe 22 hinein, welche durch einen nicht dargestellten zentralen Kanal in der Welle 12 die Lager 14 und 15 mit Öl versorgt. Unterhalb des oberen Lagers 14 befindet sich eine Schleuderscheibe 23, welche auf der Welle 12 befestigt ist. Diese verhindert, daß das aus dem Lager 14 austretende Öl durch den Motor 13 hindurchtreten muß. Über vertikale Kanäle 24 in der Wandung des Gehäuses 3 gelangt das abgeschleuderte Öl in den Ölsumpf 21 zurück.

Während des Betriebs eines Turboradialgebläses der dargestellten Art findet eine Ölzerstäubung bzw. eine Mikrotropfenbildung statt. Um zu verhindern, daß mit Öldämpfen beladene Gase durch die Wellendurchführung 19 in den Bereich des Rotors 11 gelangen, ist eine Evakuierungsleitung 31 vorgesehen. Diese weist einen

Einlaßabschnitt 32 auf, der im oberen Bereich des Gehäuses 3 in den Innenraum 18 mündet. Daran schließt sich ein Mittelabschnitt 33 an, der sich im wesentlichen vertikal durch die Wandung des Gehäuses 3 erstreckt. Der sich an den Mittelabschnitt 33 anschließende Auslaßabschnitt 34 ist im unteren Bereich aus dem Gehäuse 3 herausgeführt. Er mündet in einen Kleinflansch 35, an den während des Betriebs des Gebläses 1 eine Vakuumpumpe angeschlossen ist.

Der zylindrische Abschnitt des Gehäuses 3 ist durch Gießen hergestellt. Die Evakuierungsleitung 33 wird von einem vorzugsweise aus Edelstahl bestehenden Röhrchen gebildet, das in die Wandung des Gehäuses 3 eingegossen ist. Ebenfalls eingegossen ist die Kühlschlange 36, durch die während des Betriebs des Gebläses 1 ein Kühlmittel strömt. Um eine wirksame Kühlung der Evakuierungsleitung 33 zu erzielen, sind die einzelnen Schleifen der Kühlschlange 36 mit dem die Evakuierungsleitung bildenden Röhrchen kontaktiert, vorzugsweise verschweißt.

Der Auslaßabschnitt 34 der Evakuierungsleitung 31 ist nach der Erfindung unmittelbar (eine mittelbare Verbindung besteht über die Evakuierungsleitung 33, den Innenraum 18 und beispielsweise die Ölrückführungskanäle 24) mit dem Ölsumpf 21 verbunden und zwar über eine vertikale Bohrung in der Wandung des Gehäuses 3, welche den die Evakuierungsleitung 31 mit dem Ölsumpf 21 verbindenden Leitungsabschnitt 37 bildet. Innerhalb dieses Leitungsabschnittes 37 befindet sich ein Filterelement 38, das im wesentlichen die Aufgabe hat, das Eintreten von Öl oder Ölschaum aus dem Ölsumpf 21 in die Evakuierungsleitung 31 zu verhindern.

Figur 2 läßt erkennen, daß ein Teil (41) des Auslaßabschnittes 34 einen vergrößerten Querschnitt hat. Der Auslaßabschnitt 34 wird von einer im wesentlichen horizontalen Bohrung 42 in der Wandung des Gehäuses 3 gebildet, welche einen gegenüber den übrigen Abschnitten der Evakuierungsleitung 31 vergrößerten Querschnitt hat. In diese Bohrung 42 ist die Buchse 43 des Kleinflansches 35 eingeschoben. Dadurch entsteht ein Raum 44, in dem sich aufgrund der Durchmesserverhältnisse die Geschwindigkeit der strömenden Gase maßgeblich reduziert. Im Gasstrom noch mitgerissenes Öl wird im Raum 44 zurückgehalten. Es sammelt sich im Bereich des Grundes dieses Raumes 44. In diesen Bereich mündet der Leitungsabschnitt 37, der zum Ölsumpf 21 führt und in dem sich das Filterelement 38 befindet.

Bei dem in Figur 2 dargestellten Ausführungsbeispiel ist das Filterelement 38 als Filterpatrone ausgebildet. Es besteht aus der Hülse 46 mit dem Flansch oder Kragen 47, mit dessen Hilfe die Patrone 38 von der Seite des Ölsumpfes 21 her am Gehäuse 3 zum Beispiel mit der Schraube 49 dicht (Dichtung 48) befestigt werden kann. Innerhalb der Hülse 46 befindet sich der Filterwerkstoff 51, der zweckmäßig aus Polyäthylen (Handelsname "Poroplast") besteht. Ein derartiges Kapillar-Filterelement ist in der Lage, Öl aufzusaugen und nach der Sättigung abzugeben. Das Abgeben erfolgt durch Abtropfen in den Ölsumpf. Das Abtropfen wird durch eine spitz zulaufende Abtropfkante 52 begünstigt. Es besteht auch die Möglichkeit, daß der Filterwerkstoff 51 bis unterhalb der Öloberfläche in den Ölsumpf hineinragt. In diesem Fall fließt das vom Filterelement oben aufgenommene Öl kontinuierlich unten ab.

Das Ölfilterelement 38 ist derart ausgebildet und in den Leitungsabschnitt 37 eingesetzt, daß der obere Teil des Leitungsabschnittes 37 frei ist und einen Ölspeicherraum 53 bildet. Größere Ölmengen, die für kurze Zeit anfallen, sammeln sich in den Räumen 44 und 53, so daß ein Übertritt in die die Bohrung des Kleinflansches und damit in die angeschlossene Vakuumpumpe verhindert ist.

Während des Betriebs gelangen die mit Öldämpfen beladenen Gase aus dem Gehäuseinnenraum 18 in die Evakuierungsleitung 31. Durch die Führung dieser Leitung entlang der Kühlwasserschlange 36 und durch deren direkten Kontakt miteinander hat die Evakuierungsleitung 31 die Funktion eines Abscheiders für das mitgeführte Öl, da sie etwa die Temperatur annimmt, die auch die Kühlschlange 36 hat (ca. 10° C). Das abgeschiedene Öl fließt entlang der Innenwandung der Evakuierungsleitung 31 in den erweiterten Raum 44. Von dort aus gelangt es durch den Speicherraum 53 und das Filterelement 38 in den Ölsumpf.

## Patentansprüche

1. Gebläse oder Pumpe (1) mit einem Roter (11), mit einer während des Betriebs im wesentlichen vertikal angeordneten Rotorwelle (12), mit einem unterhalb des Rotors angeordneten Gehäuse (3), in dem sich ein Antriebsmotor (13), Wellenlagerungen (14, 15) und ein Ölsumpf (21) befinden, und mit einer die Wandung des Gehäuses (3) durchsetzenden Evakuierungsleitung (31) zum Anschluß einer Vakuumpumpe an den Gehäuseinnenraum (18), dadurch gekennzeichnet, daß ein Auslaßabschnitt (34) der Evakuierungsleitung (31) die tiefste Stelle der Evakuierungsleitung (31) bildet und mit dem Ölsumpf (21) in Verbindung steht.

2. Gebläse oder Pumpe nach Anspruch 1, dadurch gekennzeichnet, daß der Einlaßabschnitt (32) der Evakuierungsleitung (31) in den oberen Bereich des Innenraumes (18) des Gehäuses (3) mündet, daß sich der Mittelabschnitt (34) im wesenlichen vertikal durch die Gehäusewand erstreckt und daß der Auslaßabschnitt (34) im unteren Bereich aus dem Gehäuse herausgeführt ist.

3. Gebläse oder Pumpe nach Anspruch 1 oder 2, dadurch gekennzeichnet , daß zur Verbindung der Evakuierungsleitung (31) mit dem Ölsumpf (21) eine vertikal gerichtete Bohrung (37) im Gehäuse (3) vorgesehen ist.

4. Gebläse oder Pumpe nach Anspruch 1, 2 oder 3, dadurch gekennzeichnet, daß die Evakuierungsleitung (31) in dem Bereich (41), welcher mit dem Ölsumpf (21) verbunden ist, einen vergrößerten Querschnitt hat.

5. Gebläse oder Pumpe nach einem der vorhergehenden Ansprüche, dadurch gekennzeichnet, daß das Gehäuse (3) durch Gießen hergestellt ist und daß als Evakuierungsleitung (31) ein vorzugsweise aus Edelstahl bestehendes Röhrchen vorgesehen ist, das in die Gehäusewandung eingegossen ist.

6. Gebläse oder Pumpe nach einem der vorhergehenden Ansprüche, dadurch gekennzeichnet, daß das Gehäuse gekühlt ist.

7. Gebläse oder Pumpe nach Anspruch 5 und 6, dadurch gekennzeichnet, daß in die Wandung des Gehäuses (3) eine Kühlschlange (36) eingegossen ist und daß die Evakuierungsleitung (31) mit der Kühlschlange kontaktiert ist.

8. Gebläse oder Pumpe nach einem der vorhergehenden Ansprüche, dadurch gekennzeichnet, daß sich in dem die Evakuierungsleitung (31) mit dem Ölsumpf (21) unmittelbar verbindenden Leitungsabschnitt (37) ein Filterelement (38) befindet.

9. Gebläse oder Pumpe nach Anspruch 8, dadurch gekennzeichnet, daß der Leitungsabschnitt (37) oberhalb des Filterelementes (38) einen Speicherraum (53) bildet.

10. Gebläse oder Pumpe nach Anspruch 8 oder 9, dadurch gekennzeichnet, daß das Filterelement (38) als Filterpatrone mit einer Hülse (46), dem Filterwerkstoff (51) und einem Befestigungsflansch (47) ausgebildet ist.

11. Gebläse oder Pumpe nach einem der Ansprüche 8 bis 10, dadurch gekennzeichnet, daß der Filterwerkstoff (51) aus Polyäthylen besteht.

12. Gebläse oder Pumpe nach einem der Ansprüche 7 bis 10, dadurch gekennzeichnet, daß der Filterwerkstoff (51) mit einer spitz zulaufenden Abtropfkante (52) versehen ist.

13. Gebläse oder Pumpe nach einem der Ansprüche 8 bis 11, dadurch gekennzeichnet, daß der Filterwerkstoff (51) bis unterhalb der Öloberfläche in den Ölsumpf (21) hineinragt.

## Claims

1. Blower or pump (1), having a rotor (11), having a rotor shaft (12) which during operation is substantially vertically orientated, having a housing (3) which is disposed below the rotor and in which a drive motor (13), shaft bearings (14, 15) and an oil sump (21) are situated, and having an evacuating line (31) penetrating the wall of the housing (3) for the connection of a vacuum pump to the housing interior (18), characterized in that an outlet portion (34) of the evacuating line (31) forms the lowest point of the evacuating line (31) and is connected to the oil sump (21).

2. Blower or pump according to claim 1, characterized in that the inlet portion (32) of the evacuating line (31) opens into the top region of the interior (18) of the housing (3), that the middle portion (34) extends substantially vertically through the housing wall and that the outlet portion (34) is led in the bottom region out of the housing.

3. Blower or pump according to claim 1 or 2, characterized in that, for connecting the evacuating line (31) to the oil sump (21), a vertically orientated bore (37) is provided in the housing (3).

4. Blower or pump according to claim 1, 2 or 3, characterized in that the evacuating line (31) has an enlarged cross-section in the region (41) which is connected to the oil sump (21).

5. Blower or pump according to one of the preceding claims, characterized in that the housing (3) is manufactured by casting and that, as an evacuating line (31), a capillary tube preferably made of special steel is provided, which is cast into the housing wall.

6. Blower or pump according to one of the preceding claims, characterized in that the housing is cooled.

7. Blower or pump according to claim 5 and 6, characterized in that a cooling coil (36) is cast into the wall of the housing (3) and that the evacuating line (31) is bonded to the cooling coil.

8. Blower or pump according to one of the preceding claims, characterized in that a filter element (38) is situated in the line portion (37) which connects the evacuating line (31) directly to the oil sump (21).

9. Blower or pump according to claim 8, characterized in that the line portion (37) above the filter element (38) forms a storage chamber (53).

10. Blower or pump according to claim 8 or 9, characterized in that the filter element (38) takes the form of a filter cartridge having a sleeve (46), the filter material (51) and a fastening flange (47).

11. Blower or pump according to one of claims 8 to 10, characterized in that the filter material (51) is made of polyethylene.

12. Blower or pump according to one of claims 7 to 10, characterized in that the filter material (51) is provided with a tapered drip edge (52).

13. Blower or pump according to one of claims 8 to 11, characterized in that the filter material (51) projects into the oil sump (21) as far as below the surface of the oil.

## Revendications

1. Ventilateur ou pompe (1) comprenant un rotor (11) muni d'un arbre de rotor (12) disposé sensiblement verticalement pendant le travail, un carter (3) disposé au-dessous du rotor, dans lequel se trouvent un moteur d'entraînement (13), des paliers (14, 15) de l'arbre et une cuvette d'huile (21), et une conduite d'évacuation qui traverse la paroi du carter (3) et est destinée à raccorder une pompe à vide à la chambre intérieure (18) du carter, caractérisé en ce qu'un segment de sortie (34) de la conduite d'évacuation (31) forme le point le plus bas de la conduite d'évacuation (31) et est en communication avec la cuvette d'huile (21).

2. Ventilateur ou pompe selon la revendication 1, caractérisé en ce qu'un segment d'entrée (32) de la conduite d'évacuation (31) débouche dans la région supérieure de la chambre intérieure (18) du carter (3), en ce que le segment moyen (34) s'étend sensiblement verticalement dans la paroi du carter et en ce que le segment de sortie (34) émerge du carter dans la région inférieure.

3. Ventilateur ou pompe selon la revendication 1 ou 2, caractérisé en ce qu'il est prévu dans le carter (3) un perçage (37) orienté verticalement qui sert à relier la conduite d'évacuation (31) à la cuvette d'huile (21).

4. Ventilateur ou pompe selon la revendication 1, 2 ou 3, caractérisé en ce que la conduite d'évacuation (31) possède une section agrandie dans la région (41) qui est reliée à la cuvette d'huile (21).

5. Ventilateur ou pompe selon une des revendications précédentes, caractérisé en ce que le carter (3) est fabriqué par fonderie et en ce qu'il est prévu, comme conduite d'évacuation (31), un tube de préférence en acier inoxydable, qui est incorporé dans la paroi du carter par la coulée.

6. Ventilateur ou pompe selon une des revendications précédentes, caractérisé en ce que le carter est refroidi.

7. Ventilateur ou pompe selon les revendications 5 et 6, caractérisé en ce qu'un serpentin de refroidissement (36) est incorporé par coulée dans la paroi du carter (3) et en ce que la conduite d'évacuation (31) est en contact avec le serpentin de refroidissement.

8. Ventilateur ou pompe selon une des revendications précédentes, caractérisé en ce qu'un élément filtrant (38) se trouve dans le segment de conduite (37) qui relie directement la conduite d'évacuation (31) à la cuvette d'huile (21).

9. Ventilateur ou pompe selon la revendication 6, caractérisé en ce que le segment de conduite (37) forme une chambre d'accumulation (53) au-dessus de l'élément filtrant (38).

10. Ventilateur ou pompe selon la revendication 8 ou 9, caractérisé en ce que l'élément filtrant (38) est constitué par une cartouche filtrante qui comprend une douille (46), la matière filtrante (51) et une bride de fixation (47).

11. Ventilateur ou pompe selon une des revendications 8 à 10, caractérisé en ce que la matière filtrante (51) est composée de polyéthylène.

12. Ventilateur ou pompe selon une des revendications 7 à 10, caractérisé en ce que la matière filtrante (51) est munie d'une arête d'égouttage (52) se terminant en pointe.

13. Ventilateur ou pompe selon une des revendications 8 à 11, caractérisé en ce que la matière filtrante (51) se prolonge dans la cuvette d'huile (21) en plongeant au-dessous de la surface de l'huile.
